# EUROPÄISCHE PATENTSCHRIFT

(11) **EP 3 397 537 B1**
(45) Veröffentlichungstag und Bekanntmachung des Hinweises auf die Patenterteilung: **29.01.2020**
(21) Anmeldenummer: 17702842.0
(22) Anmeldetag: 30.01.2017
(51) Int. Cl.: B61L 1/18

(54) **ANORDNUNG ZUM ÜBERWACHEN DES BELEGZUSTANDES EINER WEICHE ODER EINES GLEISBEREICHS**
ASSEMBLY FOR MONITORING THE OCCUPANCY STATE OF A SWITCH OR A TRACK REGION
SYSTÈME DE SURVEILLANCE DE L'ÉTAT D'OCCUPATION D'UN AIGUILLAGE OU D'UNE ZONE DE VOIE FERRÉE

(30) Priorität: 26.02.2016 DE 102016203108
(43) Veröffentlichungstag der Anmeldung: 07.11.2018
(73) Patentinhaber: Siemens Mobility GmbH, 81739 München (DE)
(72) Erfinder: GERTLER, Frank, 38108 Braunschweig (DE)
(86) Internationale Anmeldenummer: PCT/EP2017/051914
(87) Internationale Veröffentlichungsnummer: WO 2017/144240

(56) Entgegenhaltungen:
- DE-A1- 2 010 445
- DE-A1- 2 458 456
- DE-A1- 10 320 680
- DE-A1- 19 650 837
- SCHULMEYER H-L: "Hoeherfrequenter isolierstossfreier Gleisstromkreis FME L20/80", SIGNAL + DRAHT, DVV, Bd. 73, Nr. 7/8, 1. Juli 1981 (1981-07-01) , Seiten 186-190, XP009087823, ISSN: 0037-4997

## Beschreibung

Die Erfindung betrifft eine Anordnung zum Überwachen des Belegzustandes einer Weiche oder eines Gleisbereichs mit einem als Schwingkreis ausgebildeten Gleisabschnitt, wobei der Schwingkreis eine Schiene und eine weitere Schiene des Gleisabschnitts mit beiderseits galvanischer Überbrückung sowie einen zwischen den Schienen angeordneten Kondensator enthält. Der Schwingkreis ist als ein Parallelschwingkreis ausgebildet.

Eine Anordnung dieser Art ist in der deutschen Offenlegungsschrift DE 103 20 680 A1 beschrieben und stellt einen isolierstoßfreien Gleiskreis dar. Eine solche Anordnung - auch als "Weichensperrkreis" bezeichnet - wird in Längen zwischen 3m und 24m gebaut und ermöglicht während der Befahrung des Gleisabschnitts mit einem Schienenfahrzeug, eine resultierende Dämpfungs- und Resonanzfrequenzänderung zu detektieren.

Allerdings sinkt bei kürzer werdenden Anordnungen bzw. Gleiskreisen die Induktivität und der Resonanzwiderstand des Schwingkreises und die Verluste nehmen zu. Hierdurch sinkt die Empfindlichkeit als Induktionsschleife ab. Gleichzeitig treten während einer Befahrung mit einem Schienenfahrzeug Zeitintervalle ohne Beeinflussung durch die Achsen des Schienenfahrzeugs auf, die nur durch eine möglichst hohe Empfindlichkeit der Induktionsschleife aufgefangen werden können. Die Qualität der Schienenfahrzeugerkennung nimmt somit bei kurzen Anordnungen ab, wobei zusätzliche Verluste durch bauliche Umgebungsbedingungen, wie beispielsweise Bewehrungen bei fester Fahrbahn, diese Problematik noch verschärfen. Es kann daher im Extremfall zu unerwünschten Freimeldungen während der Befahrung durch ein Schienenfahrzeug kommen.

Andererseits weisen lange Anordnungen aufgrund ihrer großen Fläche eine hohe Induktivität auf, und die Kapazität des Kondensators des Schwingkreises wird relativ klein, wodurch sich die Witterungsempfindlichkeit erhöht. Außerdem haben lange Anordnungen wegen der gleichmäßigen Feldverteilung unscharfe Belegt- und Freimeldepunkte im Bereich der jeweiligen Anordnung.

Der Erfindung liegt die Aufgabe zugrunde, das Detektionsverhalten einer solchen Anordnung unter Berücksichtigung unterschiedlicher Längen der Anordnung zu optimieren.

Zur Lösung dieser Aufgabe weist bei einer Anordnung der eingangs angegebenen Art erfindungsgemäß die Anordnung mindestens eine Anpassungsspulen-Anordnung auf, die in einem mit den beiderseitigen galvanischen Überbrückungen gebildeten Fach des Gleisabschnitts eingelegt ist und einerseits mit einem schienenfreien Anschluss des Kondensators mit einseitigem Anschluss an die eine Schiene und andererseits mit der weiteren Schiene verbunden ist.

Ein wesentlicher Vorteil der erfindungsgemäßen Anordnung wird darin gesehen, dass durch die Verwendung einer Anpassungsspulen-Anordnung im Zuge des Kondensators zwischen den beiden Schienen der Anordnung sowohl bei kurzen als auch bei langen Anordnungen die Möglichkeit geschaffen ist, die Empfindlichkeit der Anordnung zu erhöhen und die Qualität der Schienenfahrzeugerkennung erheblich zu steigern.

Bei der erfindungsgemäßen Anordnung kann die Anpassungsspulen-Anordnung in unterschiedlicher Weise ausgebildet sein. So wird es wegen einer einfachen Ausführung als vorteilhaft erachtet, wenn die Anpassungsspulen-Anordnung aus einer einzigen Anpassungsspule besteht.

Dabei ist bei einer kurzen Anordnung die einzige Anpassungsspule als eine Verlängerungs-Spule mit dem Ende ihres parallel zu der einen Schiene verlaufenden Abschnitts mit der weiteren Schiene und mit dem Ende ihres parallel zu der weiteren Schiene verlaufenden Abschnitts mit dem schienenfreien Anschluss des Kondensators verbunden.

Besonders bevorzugt wird bei der erfindungsgemäßen Anordnung ein Aufbau des Schwingkreises, bei dem die Anpassungsspulen-Anordnung aus mindestens zwei elektrisch parallel liegenden Verlängerungs-Teilspulen besteht und die Enden der jeweils parallel zu der einen Schiene verlaufenden Abschnitte der Verlängerungs-Teilspulen mit der weiteren Schiene und die Enden der jeweils parallel zu der weiteren Schiene verlaufenden Abschnitte der Verlängerungs-Teilspulen mit dem schienenfreien Anschluss des Kondensators verbunden sind. Durch diese Ausführungsform wird die Induktivität der erfindungsgemäßen Anordnung erhöht, sie wird also quasi elektrisch verlängert. Der Resonanzwiderstand steigt an, was den Verlusten entgegen wirkt. Die Empfindlichkeit der erfindungsgemäßen Anordnung erhöht sich deutlich.

Um die Wirkungen der erfindungsgemäßen Anordnung möglichst weitgehend auszuschöpfen, erstreckt sich die Anpassungsspulen-Anordnung als Verlängerungs-Spulenanordnung vorteilhafterweise über das gesamte Fach des Gleisabschnitts.

Insbesondere bei langen Anordnungen bzw. Gleiskreisen ist die erfindungsgemäße Anordnung in vorteilhafter Weise so ausgeführt, dass die einzige Anpassungsspule als eine Verkürzungs-Spule mit dem Ende ihres parallel zu der einen Schiene verlaufenden Abschnitts mit dem schienenfreien Anschluss des Kondensators und mit dem Ende ihres parallel zu der weiteren Schiene verlaufenden Abschnitts mit der weiteren Schiene verbunden ist.

Bei einer besonders vorteilhaften Ausführungsform der erfindungsgemäßen Anordnung besteht die Anpassungsspulen-Anordnung aus mindestens zwei elektrisch parallel liegenden Verkürzungs-Teilspulen mit einander entgegen gerichteten Magnetfeldern, und die Enden der jeweils parallel zu der einen Schiene verlaufenden Abschnitte der Verkürzungs-Teilspulen sind mit dem schienenfreien Anschluss des Kondensators und die Enden der jeweils parallel zu der weiteren Schiene verlaufenden Abschnitte der Verkürzungs-Teilspulen sind mit der weiteren Schiene verbunden. Mit anderen Worten, die Verkürzungs-Teilspulen sind in Reihe mit dem Kondensator so angeordnet, dass sie jeweils ein Teil-Spulenfeld aufbauen, das zu dem von dem Schienen erzeugten Schienenmagnetfeld jeweils entgegen gerichtet ist.

Dabei ist es besonders vorteilhaft, wenn sich bei der erfindungsgemäßen Anordnung die Anpassungsspulen-Anordnung als Verkürzungs-Spulenanordnung über einen Teilbereich des Faches des Gleisabschnitts erstreckt, der durch eine Einspeisestelle eines den Schwingkreis anregenden Senders und eine Auskopplungsstelle für einen zugehörigen Empfänger gegeben ist. Durch die Verkürzungs-Teilspulen wird in dem Teilbereich des Faches das Schienenmagnetfeld bedämpft, so dass dort die Induktivität absinkt und das Magnetfeld jeweils außerhalb des Teilbereichs bis zu den galvanischen Überbrückungen konzentriert wird, so dass der Belegungsunschärfe entgegen gewirkt wird.

In diesem Zusammenhang ist es besonders vorteilhaft, wenn jede Verkürzungs-Teilspule im Bereich der Einspeisestelle und der Auskoppelstelle in jeweils eine Zusatz-Spule übergeht, die jeweils in einem weiteren Teilbereich zwischen der Einspeisestelle und der Auskoppelstelle und der galvanischen Überbrückung angeordnet ist und ein Zusatz-Spulenmagnetfeld unter Verstärkung des Magnetfeldes der Schienen erzeugt. An den weiteren Teilbereichen lassen sich Belegt- und Freimeldungen der erfindungsgemäßen Anordnung besonders zuverlässig erfassen.

Zur weiteren Erläuterung der Erfindung ist in
- Fig. 1: ein Ausführungsbeispiel einer erfindungsgemäßen Anordnung mit zwei Verlängerungs-Teilspulen,
- Fig. 2: ein elektrisches Ersatzschaltbild des Schwingkreises gemäß Fig. 1, in
- Fig. 3: der Empfangspegel bei einer Befahrung des Ausführungsbeispiels nach Fig. 1, in
- Fig. 4: ein weiteres Ausführungsbeispiel einer erfindungsgemäßen Anordnung mit zwei Verkürzungs-Teilspulen, in
- Fig. 5: ein elektrisches Ersatzschaltbild des Schwingkreises gemäß Fig. 4 und in
- Fig. 6: ein zusätzliches Ausführungsbeispiel einer erfindungsgemäßen Anordnung mit zwei Verkürzungs-Teilspulen und jeweils einer Zusatz-Teilspule.

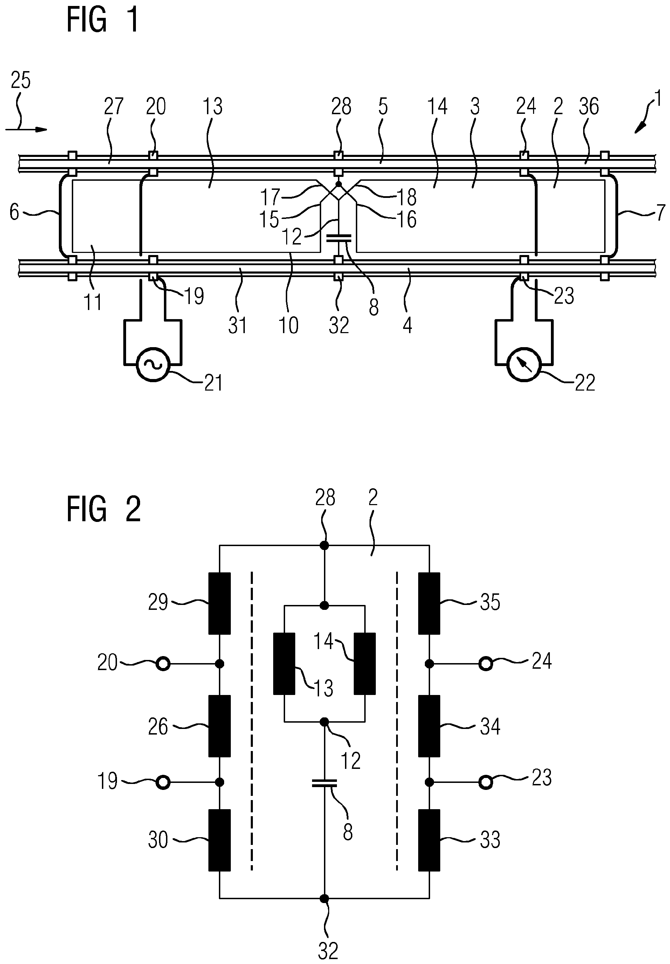

Bei dem Ausführungsbeispiel gemäß Fig. 1 ist eine Anordnung 1 zum Überwachen des Belegzustandes einer nicht gezeigten Weiche gezeigt. Die Anordnung 1 umfasst einen als Schwingkreis 2 ausgebildeten Gleisabschnitt 3, der eine Länge von beispielsweise nur etwa 4,3 Meter hat, also relativ kurz ausgebildet ist. Der Schwingkreis 2 weist eine Schiene 4 und eine weitere Schiene 5 auf. Beiderseits des Gleisabschnittes 3 befinden sich jeweils eine galvanische Überbrückung 6 bzw. 7. Zwischen den Schienen 4 und 5 ist ein Kondensator 8 angeordnet. Die eine Schiene 4 mit der weiteren Schiene 5 und dem Kondensator 8 bilden den Schwingkreis 2.

Wie der Fig. 1 ferner zu entnehmen ist, weist die Anordnung 1 eine Anpassungsspulen-Anordnung 10 auf, die in einem mit den beiderseitigen galvanischen Überbrückungen 6 und 7 gebildeten Fach 11 des Gleisabschnitts 3 eingelegt ist. Die Anpassungsspulen-Anordnung 10 ist einerseits mit einem schienenfreien Anschluss 12 des Kondensators 8 verbunden, der seinerseits einseitig an die eine Schiene 4 angeschlossen ist. Andererseits ist die Anpassungsspulen-Anordnung 10 direkt mit der weiteren Schiene 5 verbunden. Die Anpassungsspulen-Anordnung 10 bildet also einen Bestandteil des Schwingkreises 2.

Aus der Fig. 1 geht ferner hervor, dass die Anpassungsspulen-Anordnung 10 aus mindestens zwei elektrisch parallel liegenden Verlängerungs-Teilspulen 13 und 14 besteht. Dabei sind Enden 15 bzw. 16 der jeweils parallel zu der einen Schiene 4 verlaufenden Abschnitte der Verlängerungs-Teilspulen 13 und 14 direkt mit der weiteren Schiene 5 verbunden. Enden 17 bzw. 18 der jeweils parallel zu der weiteren Schiene 5 verlaufenden Abschnitte der Verlängerungs-Teilspulen 13 bzw. 14 sind jeweils mit dem schienenfreien Anschluss 12 des Kondensators 8 verbunden.

An einer Einspeisestelle 19 bzw. 20 ist ein Niederfrequenzsender 21 angeschlossen ist; zu dem Sender 21 gehört ein Empfänger 22, der an einer Auskoppelstelle 23 bzw. 24 mit der einen und der weiteren Schiene 4 bzw. 5 verbunden ist. Durch die Unterbringung der Verlängerungs-Teilspulen 13 und 14 innerhalb des mit den galvanischen Überbrückungen 6 und 7 gebildeten Faches 11 ergibt sich eine Verstärkung des von den Schienen 4 und 5 mit den galvanischen Überbrückungen 6 und 7 gebildeten Schienenmagnetfeldes mit Hilfe der Verlängerungs-Teilspulen 13 und 14, was zu einer elektrischen (nicht tatsächlichen) Verlängerung des Gleisabschnitts 3 führt. Damit ist erreicht, dass trotz einer relativ kurzen Ausführung der Anordnung 1 eine zuverlässige Belegt- bzw. Freimeldung gegeben werden kann, wenn ein beispielsweise in Richtung eines Pfeils 25 sich bewegendes, nicht dargestelltes Schienenfahrzeug den Gleisabschnitt 3 befährt.

In Fig. 2 ist ein elektrisches Ersatzschaltbild des in Figur 1 dargestellten Schwingkreises 2 gezeigt. Es ist in Übereinstimmung mit Fig. 1 zu erkennen, dass das Ersatzschaltbild die zwei Einspeisestellen 19 und 20 aufweist, an die - siehe Fig. 1 - der Sender 21 angeschlossen ist. Damit liegt zwischen den Einspeisestellen 20 und 21 ein induktiver Widerstand 26, der der Teilinduktivität der einen galvanischen Überbrückung 6 entspricht. Ein in Fig. 1 gezeigter Abschnitt 27 der weiteren Schiene 5 von der galvanischen Überbrückung 6 bis zu einem Anschlusspunkt 28 an der weiteren Schiene 5 bildet einen weiteren induktiven Widerstand 29; in Reihe mit dem induktiven Widerstand 26 liegt ein zusätzlicher induktiver Widerstand 30, der von einem Abschnitt 31 der einen Schiene 4 zwischen der galvanischen Überbrückung 6 und einem Anschlusspunkt 32 gebildet ist.

Parallel zu den eben behandelten Elementen des Schwingkreises 2 befindet sich gemäß Fig. 2 eine weitere Ausbildung von induktiven Widerständen 33, 34 und 35, die hinsichtlich des induktiven Widerstands 33 auf der induktiven Wirkung der einen Schiene 4 zwischen der Anschlussstelle 32 des Kondensators 8 und der galvanischen Überbrückung 7, hinsichtlich des induktiven Widerstands 34 auf der induktiven Wirkung der galvanischen Überbrückung 7 und hinsichtlich des induktiven Widerstands auf der induktiven Wirkung eines Abschnitts 36 zwischen der galvanischen Überbrückung 7 und dem Anschluss 28 der weiteren Schiene 5 beruhen.

Wie Fig. 2 deutlich erkennen lässt, ist der Kondensator 8 des Schwingkreises 2 einerseits mit dem Anschluss 32 an der einen Schiene 4 (vgl. dazu auch Fig. 1) verbunden und weist andererseits den schienenfreien Anschluss 12 auf. Mit diesem schienenfreien Anschluss 12 sind die Verlängerungs-Teilspulen 13 und 14 unter Bildung einer Parallelschaltung verbunden. Das von dem schienenfreien Anschluss 12 des Kondensators 8 abgewandte Ende der Parallelschaltung ist mit dem Anschluss 28 an der weiteren Schiene 5 verbunden.

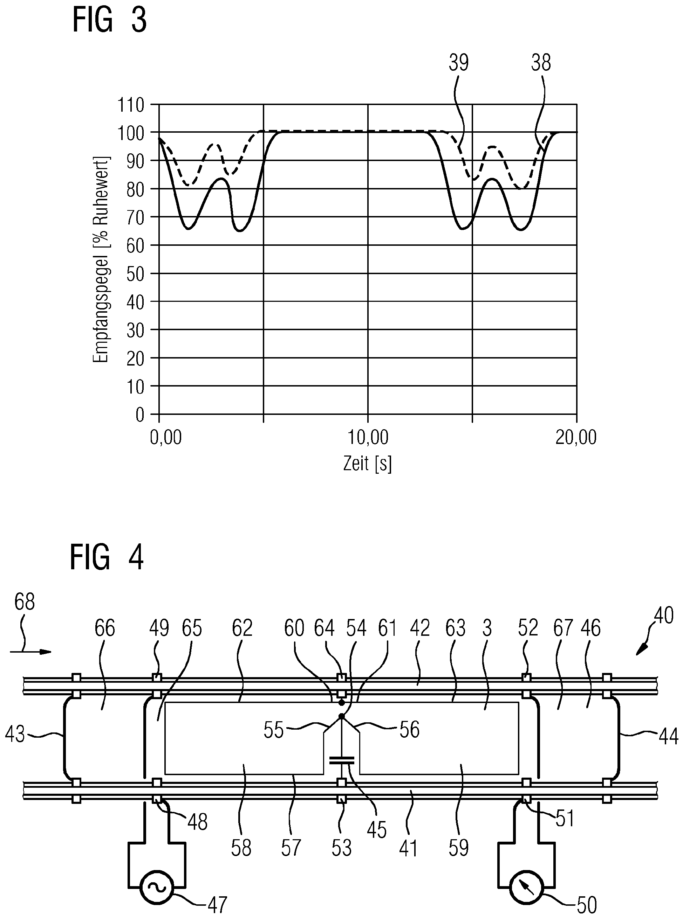

Die Fig. 3 zeigt das Verhalten des in Fig. 2 dargestellten Schwingkreises 2 bei einer Befahrung des Gleisabschnitts 3 und lässt erkennen, dass beim Befahren während eines Zeitintervalls zwischen 0 und 5 Sekunden bei einem angenommenen Beispiel eine Änderung des Empfangspegels am Empfänger 22 gemäß der Darstellung nach der ausgezogenen Kurve 38 erfolgt. Danach ist nach etwa 5 Sekunden ein Ruhewert erreicht, der sich erst nach etwa 15 Sekunden nach dem Beginn der Befahrung ändert. Zu dieser Zeit ist der Empfangspegel wieder erheblich verändert, was zu einer zuverlässigen Freimeldung des Gleisabschnitts 3 führt.

In Fig. 3 ist zum Vergleich eine weitere Kurve 39 gezeigt, die die Verhältnisse wiedergibt, wenn eine Anpassungsspulen-Anordnung bzw. die Verlängerungs-Teilspulen 13 und 14 nicht vorgesehen sind. Es ist ein deutlicher Unterschied zu erkennen, der die Verbesserung hinsichtlich der Meldung des Belegzustandes bzw. des Freimeldezustandes zeigt.

Das Ausführungsbeispiel gemäß Fig. 4 für einen relativ langen Gleisabschnitt in der Größenordnung von etwa 24 Metern zeigt wiederum eine Anordnung 40 mit einer Schiene 41 und einer weiteren Schiene 42 , die mittels galvanischer Überbrückungen 43 und 44 mit einem Kondensator 45 einen Schwingkreis 46 bilden. Hierbei ist wiederum ein Sender 47 im Niederfrequenzbereich an einer Einspeisestelle 48 und 49 mit den beiden Schienen 41 und 42 verbunden; ein zugehöriger Empfänger 50 ist an einer Auskoppelstelle 51 und 52 der beiden Schienen 41 und 42 vorgesehen.

Auch bei diesem Ausführungsbeispiel ist der Kondensator 45 nicht unmittelbar zwischen die beiden Schienen 41 und 42 geschaltet, sondern er ist einerseits mit einer Anschlussstelle 53 mit der einen Schiene 41 verbunden und andererseits mit einem schienenfreien Anschluss 54 versehen, zu dem Enden 55 und 56 von parallel zu der einen Schiene 41 verlaufenden Abschnitten 57 einer Verkürzungs-Teilspule 58 und einer weiteren Verkürzungs-Teilspule 59 führen. Enden 60 und 61 von parallel zu der weiteren Schiene 42 verlaufenden Abschnitten 62 und 63 der Verkürzungs-Teilspulen 58 und 59 sind mit einem Anschluss 64 der weiteren Schiene 42 verbunden. Die Verkürzungs-Teilspulen 58 und 59 liegen in einem Teilbereich 65 zwischen den Einspeisestellen 48 und 49 des Senders 47 bzw. den Auskoppelstellen 51 und 52 des Empfängers 50.

Außerhalb dieses Teilbereichs 65 befindet sich jeweils ein weiterer Teilbereich 66 bzw. 67 bis hin zu den galvanischen Überbrückungen 43 und 44. In den weiteren Teilbereichen 66 und 67 ist das von den Schienen 41 und 42 mit den galvanischen Überbrückungen 43 und 44 gebildete Schienenmagnetbild relativ stark, während es in dem Teilbereich 65 relativ stark gedämpft ist. Das Magnetfeld wird also in den weiteren Teilbereichen 66 und 67 konzentriert, was der Belegungsunschärfe entgegen wirkt, also unscharfe Belegt- und Freimeldepunkte vermeidet.

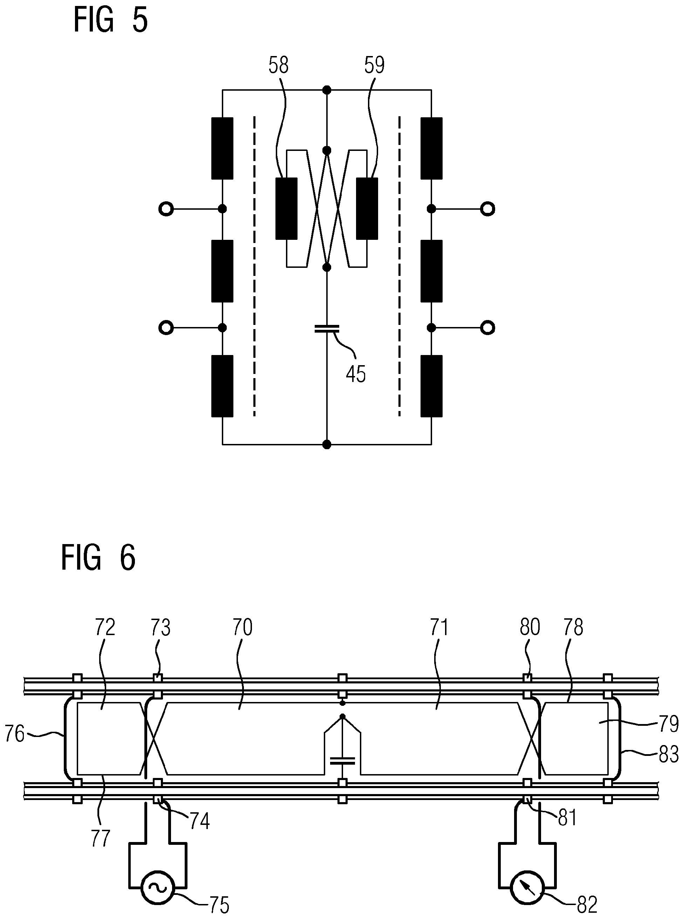

Fig. 5 zeigt ein Ersatzschaltbild des Schwingkreises 46 gemäß Fig. 4 und lässt erkennen, dass in Abweichung von der Darstellung gemäß Fig. 2 hier die dem Kondensator 45 nachgeordneten Verkürzungs-Teilspulen 58 und 59 gegensinnig hinsichtlich ihres magnetischen Feldes in Bezug auf das Schienenmagnetfeld ausgerichtet sind, so dass das resultierende Magnetfeld innerhalb des einen Teilbereichs 65 gedämpft ist. Befährt ein Schienenfahrzeug in Richtung eines Pfeils 68 (siehe Fig. 4) die Anordnung 40 gemäß Fig. 4, dann macht sich - ähnlich wie in Fig. 3 gezeigt - eine relativ starke Pegeländerung im Empfänger 50 bemerkbar, die eine zuverlässige Belegt- und Freimeldung gestattet.

Das Ausführungsbeispiel gemäß Fig. 6 entspricht zu großen Teilen dem nach Fig. 4, jedoch ist hier neben einer Verkürzungs-Teilspule 70 und einer weiteren Verkürzungs-Teilspule 71 in einem weiteren Teilbereich 72 zwischen den Einspeisestellen 73 und 74 für einen Sender 75 und einer galvanischen Überbrückung 76 eine Zusatz-Teilspule 77 vorgesehen; diese Zusatz-Teilspule 77 schließt sich mit entgegen gerichtetem Wickelsinn an die eine Verkürzungs-Teilspule 70 an und bildet ein Zusatzspulen-Magnetfeld aus, das zusätzlich das Schienenmagnetfeld verstärkt.

Entsprechendes gilt hinsichtlich einer weiteren Zusatz-Teilspule 78, die sich in einem weiteren Teilbereich 79 befindet. Der weitere Teilbereich 79 ist durch Auskoppelstellen 80 und 81 für den Empfänger 82 und die galvanische Überbrückung gegeben. In den weiteren Teilbereichen 72 und 79 ergibt sich eine Verstärkung des Schienenmagnetfeldes, so dass sich hierdurch eine Belegt- bzw. Freimeldung mit besonders hoher Belegungsschärfe erfassen lässt.

## Patentansprüche

1. Anordnung (1) zum Überwachen des Belegzustandes einer Weiche oder eines Gleisbereichs mit einem als Schwingkreis (2) ausgebildeten Gleisabschnitt (3), wobei der Schwingkreis (2) eine Schiene (4) und eine weitere Schiene (5) des Gleisabschnitts (3) mit beiderseits galvanischer Überbrückung (6,7) sowie einen zwischen den Schienen (4,5) angeordneten Kondensator (8) enthält,
**dadurch gekennzeichnet, dass**
die Anordnung (1) mindestens eine Anpassungsspulen-Anordnung (10) aufweist, die in einem mit den beiderseitigen galvanischen Überbrückungen (6,7) gebildeten Fach (11) des Gleisabschnitts (3) eingelegt ist und einerseits mit einem schienenfreien Anschluss (12) des Kondensators (8) mit einseitigem Anschluss an die eine Schiene (4) und andererseits mit der weiteren Schiene (5) verbunden ist.

2. Anordnung nach Anspruch 1,
**dadurch gekennzeichnet, dass**
die Anpassungsspulen-Anordnung aus einer einzigen Anpassungsspule besteht.

3. Anordnung nach Anspruch 2,
**dadurch gekennzeichnet, dass**
die einzige Anpassungsspule als eine Verlängerungs-Spule mit dem Ende ihres parallel zu der einen Schiene verlaufenden Abschnitts mit der weiteren Schiene und mit dem Ende ihres parallel zu der weiteren Schiene verlaufenden Abschnitts mit dem schienenfreien Anschluss des Kondensators verbunden ist.

4. Anordnung nach Anspruch 1,
**dadurch gekennzeichnet, dass**
die Anpassungsspulen-Anordnung (10) aus mindestens zwei elektrisch parallel liegenden Verlängerungs-Teilspulen (13,14) besteht und die Enden (15,16) der jeweils parallel zu der einen Schiene (4) verlaufenden Abschnitte der Verlängerungs-Teilspulen (13,14) mit der weiteren Schiene (5) und die
Enden (17,18) der jeweils parallel zu der weiteren Schiene (5) verlaufenden Abschnitte der Verlängerungs-Teilspulen (13,14) mit dem schienenfreien Anschluss (12) des Kondensators (8) verbunden sind.

5. Anordnung nach einem der vorangehenden Ansprüche,
**dadurch gekennzeichnet, dass**
sich die Anpassungsspulen-Anordnung (10) als Verlängerungs-Spulenanordnung (13,14) über das gesamte Fach (11) des Gleisabschnitts (3) erstreckt.

6. Anordnung nach Anspruch 2,
**dadurch gekennzeichnet, dass**
die einzige Anpassungsspule als eine Verkürzungs-Spule mit dem Ende ihres parallel zu der einen Schiene verlaufenden Abschnitts mit dem schienenfreien Anschluss des Kondensators und mit dem Ende ihres parallel zu der weiteren Schiene verlaufenden Abschnitts mit der weiteren Schiene verbunden ist.

7. Anordnung nach Anspruch 1,
**dadurch gekennzeichnet, dass**
die Anpassungsspulen-Anordnung aus mindestens zwei elektrisch parallel liegenden Verkürzungs-Teilspulen (58,59) mit einander entgegen gerichteten Magnetfeldern besteht und die Enden (55,56) der jeweils parallel zu der einen Schiene (41) verlaufenden Abschnitte (57) der Verkürzungs-Teilspulen (58,59) mit dem schienenfreien Anschluss (54) des Kondensators (45) und die Enden (60,61) der jeweils parallel zu der weiteren Schiene (42) verlaufenden Abschnitte der Verkürzungs-Teilspulen (58,59) mit der weiteren Schiene verbunden (42) sind.

8. Anordnung nach Anspruch 1, 6 oder 7,
**dadurch gekennzeichnet, dass**
sich die Anpassungsspulen-Anordnung als Verkürzungs-Spulenanordnung (58,59) über einen Teilbereich des Faches des Gleisabschnitts erstreckt, der durch eine Einspeisestelle (48,49) des den Schwingkreis (46) anregenden Senders (47) und eine Auskoppelstelle (51,52) für einen zugehörigen Empfänger (50) gegeben ist.

9. Anordnung nach Anspruch 8,
d**adurch gekennzeichnet,** dass
jede Verkürzungs-Teilspule (70,71) im Bereich der Einspeisestelle (73,74) und der Auskoppelstelle (80,81) in jeweils eine Zusatz-Teilspule (72,78) übergeht, die jeweils in einem weiteren Teilbereich (77,79) zwischen der Einspeisestelle (73,74) und der Auskoppelstelle (80,81) und der galvanischen Überbrückung (76,83) angeordnet ist und ein Zusatz-Spulenmagnetfeld unter Verstärkung des Magnetfeldes der Schienen (41,42) erzeugt.

## Claims

1. Assembly (1) for monitoring the occupancy state of a switch or a track region, comprising a track section (3) which is designed as a resonant circuit (2), wherein the resonant circuit (2) contains a rail (4) and an additional rail (5) of the track section (3) with a galvanic bridge (6, 7) on both sides and a capacitor (8) arranged between the rails (4, 5),
**characterised in that**
the assembly (1) has at least one adaptation coil assembly (10) which is placed in a compartment (11) of the track section (3) formed by the galvanic bridges (6, 7) on both sides and is connected to a rail-free connection (12) of the capacitor (8) with a single-sided connection to one rail (4) on one side and to the other rail (5) on the other side.

2. Assembly according to claim 1,
**characterised in that**
the adaptation coil assembly consists of a single adaptation coil.

3. Assembly according to claim 2,
**characterised in that**
the single adaptation coil is connected as an extension coil with the end of its section running parallel to one rail to the other rail and with the end of its section running parallel to the other rail to the rail-free connection of the capacitor.

4. Assembly according to claim 1,
**characterised in that**
the adaptation coil assembly (10) consists of at least two electrically parallel extension sub-coils (13, 14) and the ends (15, 16) of each of the sections of the extension sub-coils (13, 14) parallel to one rail (4) are connected to the other rail (5) and the ends (17, 18) of each of the sections of the extension sub-coils (13, 14) parallel to the other rail (5) to the rail-free connection (12) of the capacitor (8).

5. Assembly according to one of the preceding claims,
**characterised in that**
the adaptation coil assembly (10), as an extension coil assembly (13, 14), extends over the entire compartment (11) of the track section (3).

6. Assembly according to claim 2,
**characterised in that**
the single adaptation coil is connected as a shortening coil to the rail-free connection of the capacitor with the end of its section parallel to the one rail and to the other rail with the end of its section parallel to the other rail.

7. Assembly according to claim 1,
**characterised in that**
the adaptation coil assembly comprises at least two electrically parallel shortening sub-coils (58, 59) with opposing magnetic fields and the ends (55, 56) of each of the sections (57) of the shortening sub-coils (58, 59) parallel to one rail (41) are connected to the rail-free connection (54) of the capacitor (45) and the ends (60, 61) of each of the sections of the shortening sub-coils (58, 59) parallel to the other rail (42) are connected to the other rail (42).

8. Assembly according to claim 1, 6 or 7,
**characterised in that**
the adaptation coil assembly (10), as a shortening coil assembly (58, 59) extends over a sub-section of the compartment of the track section provided for an associated receiver (50) by a feed point (48, 49) of the transmitter (47) exciting the resonant circuit (46) and a decoupling point (51, 52) .

9. Assembly according to claim 8,
**characterised in that**
in the region of the feed point (73, 74) and the decoupling point (80, 81) each shortening sub-coil (70, 71) merges into a respective additional sub-coil (72, 78), which in each case is arranged in a further sub-section (77, 79) between the feed point (73, 74) and the decoupling point (80, 81) and the galvanic bridge (76, 83) and generates an additional coil magnetic field while amplifying the magnetic field of the rails (41, 42).

## Revendications

1. Système (1) de contrôle de l'état d'occupation d'un aiguillage ou d'une zone de voie ferrée, comprenant un tronçon (3) de voie constitué en circuit (2) oscillant, le circuit (2) oscillant comportant un rail (4) et un autre rail (5) du tronçon (3) de voie avec dérivation (6, 7) galvanique des deux côtés, ainsi qu'un condensateur (8) monté entre les rails (4, 5),
**caractérisé en ce que**
le système (1) a au moins un système (10) de bobine d'adaptation, qui est inséré dans une travée (11), formée par les dérivations (6, 7) galvaniques des deux côtés, du tronçon (3) de voie et qui est reliée, d'une part, par une borne (12) sans rail du condensateur (8) à une borne d'un côté du un rail (4) et, d'autre part, à l'autre rail (5).

2. Système suivant la revendication 1,
**caractérisé en ce que**
le système de bobine d'adaptation est constitué d'une seule bobine d'adaptation.

3. Système suivant la revendication 2,
**caractérisé en ce que**
la seule bobine d'adaptation est sous la forme d'une bobine de prolongement connectée par l'extrémité de sa partie s'étendant parallèlement au un rail à l'autre rail et par l'extrémité de sa partie s'étendant parallèlement à l'autre rail à la borne sans rail du condensateur.

4. Système suivant la revendication 1,
**caractérisé en ce que**
le système (10) de bobine d'adaptation est constitué d'au moins deux bobines (13, 14) partielles de prolongement montées électriquement en parallèle et les extrémités (15, 16) des parties s'étendant, respectivement, en parallèle au un rail (4), des bobines (13, 14) partielles de prolongement sont connectées à l'autre rail (5) et les extrémités (17, 18) des parties s'étendant, respectivement, en parallèle à l'autre rail (5), des bobines (13, 14) partielles de prolongement sont connectées à la borne (12) sans rail du condensateur (8).

5. Système suivant l'une des revendications précédentes,
**caractérisé en ce que**
le système (10) de bobine d'adaptation s'étend, en tant que système (13, 14) de bobine de prolongement, sur toute la travée (11) du tronçon (3) de voie.

6. Système suivant la revendication 2,
**caractérisé en ce que**
la seule bobine d'adaptation est, en tant que bobine de raccourcissement, connectée, par l'extrémité de sa partie s'étendant parallèlement au un rail, à la borne sans rail du condensateur et par l'extrémité de sa partie s'étendant parallèlement à l'autre rail, à l'autre rail.

7. Système suivant la revendication 1,
**caractérisé en ce que**
le système de bobine d'adaptation est constitué d'au moins deux bobines (58, 59) partielles de raccourcissement montées en parallèle électriquement, à champs magnétiques dirigés de manière opposée et des extrémités (55, 56) des parties (57) s'étendant, respectivement, parallèlement au un rail (41), des bobines (58, 59) partielles de raccourcissement sont connectées (42) à la borne (54) sans rail du condensateur (45) et les extrémités (60, 61) des parties s'étendant, respectivement, parallèlement à l'autre rail (42), des bobines (58, 59) partielles de raccourcissement à l'autre rail.

8. Système suivant la revendication 1, 6 ou 7,
**caractérisé en ce que**
le système de bobine d'adaptation s'étend en tant que système (58, 59) de bobine de raccourcissement sur une région partielle de la travée du tronçon de voie, qui est donnée par un point (48, 49) d'alimentation de l'émetteur (47) excitant le circuit (46) oscillant et par un point (51, 52) de découplage d'un récepteur (50) associé.

9. Système suivant la revendication 8,
**caractérisé en ce que**
chaque bobine (70, 71) partielle de raccourcissement se transforme dans la partie du point (73, 74) d'alimentation et du point (80, 81) de découplage en, respectivement, une bobine (72, 78) partielle de supplément, qui est disposée, respectivement, dans une autre région (77, 79) partielle, entre le point (73, 74) d'alimentation et le point (80, 81) de découplage et la dérivation (76, 83) galvanique et produit un champ magnétique de bobine supplémentaire avec renforcement du champ magnétique des rails (41, 42).
